# EUROPÄISCHE PATENTSCHRIFT

(11) **EP 3 450 216 B1**
(45) Veröffentlichungstag und Bekanntmachung des Hinweises auf die Patenterteilung: **25.11.2020**
(21) Anmeldenummer: 18173464.1
(22) Anmeldetag: 22.05.2018
(51) Int. Cl.: B60C 11/13, B60C 11/03

(54) **FAHRZEUGLUFTREIFEN**
PNEUMATIC TYRE FOR A VEHICLE
PNEUMATIQUE DE VÉHICULE

(30) Priorität: 30.08.2017 DE 102017215187
(43) Veröffentlichungstag der Anmeldung: 06.03.2019
(73) Patentinhaber: Continental Reifen Deutschland GmbH, 30165 Hannover (DE)
(72) Erfinder: Behr, Ulrich, 30167 Hannover (DE)
(74) Vertreter: Finger, Karsten

(56) Entgegenhaltungen:
- EP-A1- 2 289 714
- DE-T5-112015 004 632
- JP-A- H07 186 623
- JP-A- 2013 078 984
- JP-A- 2016 199 078
- US-A1- 2016 263 945

## Beschreibung

Die Erfindung betrifft einen Fahrzeugluftreifen mit einem Laufstreifen mit Profilpositiven, beispielsweise Profilblöcken oder Profilbändern, und Profilnegativen, beispielsweise Rillen oder Einschnitten, wobei im Laufstreifen innerhalb der Bodenaufstandsfläche zumindest zwei in Umfangsrichtung des Laufstreifens umlaufende, gegebenenfalls durch Rillen oder Einschnitte unterbrochene Nuten verlaufen, welche eine Tiefe von mindestens 2,0 mm, einen in dieser Tiefe verlaufenden Nutgrund und an diesen anschließende Nutflanken aufweisen, welche, im Querschnitt der Nuten betrachtet, zueinander V-förmig verlaufen, zur Oberfläche des Laufstreifens zueinander konkav gekrümmte Übergangsrundungen sowie zwischen den Übergangsrundungen und dem Nutgrund verlaufende ebene Flankenabschnitte aufweisen, wobei die Nuten zwischen den radial äußeren Enden der Übergangsrundungen eine Breite von 2,0 mm bis 10,0 mm aufweisen.

Ein derartiger Fahrzeugluftreifen ist beispielsweise aus der JP 2016 199 078 A bekannt. Der Laufstreifen dieses Reifens weist drei in Umfangsrichtung umlaufende Nuten auf, deren Nutflanken, im Querschnitt der Nuten betrachtet, zueinander V-förmig verlaufen. Die Nutflanken weisen zur Oberfläche des Laufstreifens verlaufende, zueinander konkav gekrümmte Übergangsrundungen sowie unter einem Winkel von 10° bis 45° zur radialen Richtung verlaufende, ebene Flankenabschnitte auf.

Aus der EP 0 547 019 B1 ist ein Fahrzeugluftreifen mit einem Laufstreifen bekannt, welcher Profilblöcke aufweist, die mit in Draufsicht U-förmigen Einschnitten versehen sind, wobei die Einschnitte den Flächenschwerpunkt der Profilblöcke umschließen und die freien Schenkelenden der Einschnitte in axialer Richtung und zu den die Profilblöcke begrenzenden Umfangsrillen verlaufen. In Umfangsrichtung umlaufende, durch Querrillen in ihrem Verlauf unterbrochene Nuten, welche eine Breite von zirka 1,0 mm und eine Tiefe von 0,5 mm bis 2,0 mm aufweisen, kreuzen die U-förmigen Einschnitte.

Es ist bekannt, dass in Laufstreifen ausgebildete Rillen, wie insbesondere Umfangs-, Quer- oder Schrägrillen, für ein gutes Wasserableitvermögen des Laufstreifens wichtig sind. Aquaplaning ist jedoch nach wie vor ein Thema, welches daher im Vordergrund der Weiterentwicklung von Laufstreifen steht. Diesbezügliche Verbesserungen sollen vor allem auch helfen, die Handlingeigenschaften des Reifens auf nasser Fahrbahn zu optimieren.

Besonderes Augenmerk wird daher auch darauf gelegt, dass die für eine gute Wasserableitung erforderlichen Profilnegative, also Rillen oder Einschnitte, die Quersteifigkeit der Profilpositive nicht ungleichmäßig oder zu stark verringern.

Der Erfindung liegt daher die Aufgabe zugrunde, bei einem Reifen der eingangs genannten Art, das Wasserableitvermögen des Laufstreifens unter Bedachtnahme auf eine etwas geringere, für gute Handlingeigenschaften auf nasser Fahrbahn günstige laterale Biegefähigkeit der Profilpositive zu optimieren.

Die gestellte Aufgabe wird erfindungsgemäß dadurch gelöst, dass die Tiefe der Nuten höchstens 50% der Profiltiefe beträgt, wobei die ebenen Flankenabschnitte der Nutflanken, im Querschnitt der Nuten betrachtet, zur radialen Richtung unter einem Winkel von 24° bis 30°, insbesondere von bis zu 26°, geneigt sind.

In erfindungsgemäß ausgeführte Nuten fließt über die Übergangsrundungen der Nutflanken beim Fahren auf nasser Fahrbahn Wasser weitgehend verwirbelungsfrei ein. Der V-förmige Querschnitt der Nuten bedingt mehr Rillenvolumen im Bereich der Laufstreifenperipherie, wodurch das Wasseraufnahmevermögen der Nuten verbessert wird. Zusätzlich bewirken die Nuten ein Erhöhen der lateralen Biegefähigkeit sowie ein Vergleichmäßigen der Quersteifigkeit der Profilpositive, in welchen sie verlaufen. Dieser Effekt ist für ausgewogene Fahr- und Handlingeigenschaften des Reifens auf nasser und trockener Fahrbahn vorteilhaft. Die Übergangsrundungen tragen zusätzlich zur Verbesserung der Fahr- und Handlingeigenschaften bei, da die Nuten durch die Übergangsrundungen an der Laufstreifenperipherie keine sich beim Fahren "einrollenden" scharfen Kanten aufweisen.

Die Flankenabschnitte haben eine stabilisierende Wirkung auf die unmittelbar anschließenden Profilpositivbereiche.

Gemäß einer bevorzugten Ausführungsvariante beträgt die Breite der Nuten zwischen den radial äußeren Enden der Übergangsrundungen mindestens 3,0 mm. Dadurch ist insbesondere das Wasseraufnahmevermögen der Nuten besonders gut.

Gemäß einer weiteren bevorzugten Ausführungsvariante beträgt die Tiefe der Nuten bis zu 35% der Profiltiefe. Diese Variante unterstützt einerseits eine sehr effektive Wasseraufnahme der Nuten, wobei weiterhin eine hohe Quersteifigkeit der Profilpositive erhalten bleibt. Ein solche Nuten aufweisender Laufstreifen ist daher hinsichtlich des Wasserableitvermögens und der Handlingeigenschaften besonders gut ausbalanciert.

Gemäß einer weiteren bevorzugten Ausführungsvariante verlaufen die zumindest zwei in Umfangsrichtung umlaufenden Nuten in einem Umfangsabschnitt des Laufstreifens, welcher in axialer Richtung eine Breite von 25% bis 70%, insbesondere von mindestens 50%, der Breite der Bodenaufstandsfläche des Laufstreifens aufweist. Der Umfangsabschnitt des Laufstreifens ist insbesondere bei Geradeausfahrt für eine gute Wasserableitung von Bedeutung.

Es ist ferner vorteilhaft, wenn die zumindest zwei im erwähnten Umfangsabschnitt des Laufstreifens in Umfangsrichtung umlaufenden Nuten zwischen den radial äußeren Enden ihrer einander benachbarten Übergangsrundungen in axialer Richtung einen Abstand von 20% bis 50% der Breite der Bodenaufstandsfläche aufweisen.

Gemäß einer weiteren bevorzugten Ausführungsvariante verlaufen die zumindest zwei in Umfangsrichtung umlaufenden Nuten in einem schulterseitigen Umfangsabschnitt des Laufstreifens, welcher in axialer Richtung eine Breite von 20% bis 40% der Breite der Bodenaufstandsfläche des Laufstreifens aufweist. Schulterseitige Umfangsabschnitte werden bei Kurvenfahrt und beim Bremsen in verstärktem Ausmaß beansprucht, wobei durch die Nuten die laterale Biegefähigkeit der Profilpositive erhöht ist und derart, insbesondere bei Kurvenfahrt, die Fahr- und Handlingeigenschaften verbessert sind.

Gemäß einer weiteren bevorzugten Ausführungsvariante verlaufen die zumindest zwei in Umfangsrichtung umlaufenden Nuten innerhalb derselben Blockreihe oder desselben Profilbandes. Die beschriebenen Effekte treten daher in entsprechend verstärktem Ausmaß auf. Insbesondere bei in axialer Richtung etwas breiteren Profilpositiven ist dies von Vorteil.

Ferner ist es vorteilhaft, wenn die zumindest zwei in Umfangsrichtung umlaufenden Nuten zwischen den radial äußeren Enden ihrer einander benachbarten Übergangsrundungen in axialer Richtung einen Abstand von 15,0 mm bis 40,0 mm aufweisen. Dadurch bleibt eine gewisse Quersteifigkeit des zwischen den Nuten befindlichen Bereiches des Profilpositivs erhalten, wodurch die Handlingeigenschaften auf vorteilhafte Weise beeinflusst werden.

Eine weitere bevorzugte Ausführungsvariante ist dadurch gekennzeichnet, dass zumindest eine der in Umfangsrichtung umlaufenden Nuten in der einen Hälfte des Laufstreifens verläuft und zumindest eine der in Umfangsrichtung umlaufenden Nuten in der anderen Hälfte des Laufstreifens verläuft.

Die beschriebenen Effekte treten in besonders gleichmäßiger Weise über die Breite des Laufstreifens auf, wenn innerhalb der Bodenaufstandsfläche bis zu sechs, insbesondere bis zu vier, in Umfangsrichtung umlaufende Nuten vorgesehen sind.

Gemäß einer weiteren bevorzugten Ausführungsvariante sind die Übergangsrundungen der Nutflanken, im Querschnitt der Nuten betrachtet, entlang von Kreisbögen mit einem Radius von 0,5 mm bis 5,0 mm, insbesondere von mindestens 2,5 mm, gekrümmt. Ein derartige Ausführung begünstigt beim Fahren auf nasser Fahrbahn das verwirbelungsfreie Einströmen des aufgenommenen Wassers in die Nuten.

In diesem Zusammenhang ist es ferner von Vorteil, wenn die Übergangsrundungen der Nutflanken, im Querschnitt der Nuten betrachtet, knickfrei in die Oberfläche des Laufstreifens übergehen.

Gemäß einer weiteren bevorzugten Ausführungsvariante weist der Nutgrund der Nuten an seiner breitesten Stelle eine Breite von 0,5 mm bis 1,6 mm auf.

Weitere Merkmale, Vorteile und Einzelheiten der Erfindung werden nun anhand der Zeichnung, die vereinfacht und schematisch Ausführungsbeispiele der Erfindung zeigt, näher beschrieben. Dabei zeigen
Fig. 1 eine Draufsicht auf einen zentralen Umfangsabschnitt eines Laufstreifens,
Fig. 1a einen Schnitt entlang der Linie Ia-Ia der Fig. 1 und
Fig. 2 eine Draufsicht auf einen schulterseitigen Umfangsabschnitt des Laufstreifens.

Erfindungsgemäß ausgeführte Fahrzeugluftreifen sind Reifen in Radialbauart, insbesondere für Personenkraftwagen, Vans oder Light-Trucks. Die Reifen können Winter-, Sommer- oder Ganzjahresreifen sein. Die Profiltiefe der Laufstreifen der Fahrzeugluftreifen beträgt üblicherweise 6,5 mm bis 8,5 mm.

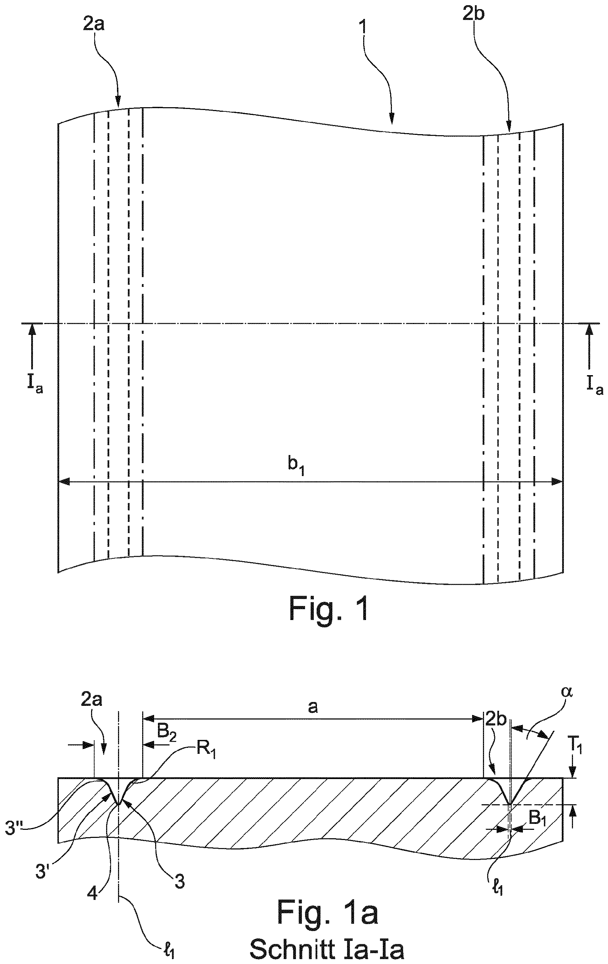

Fig. 1 zeigt einen mittleren, insbesondere zentralen, und in Umfangsrichtung umlaufenden Umfangsabschnitt 1 eines Laufstreifens. Der Umfangsabschnitt 1 weist in axialer Richtung eine Breite b₁ von 50% bis 70% der Breite der Bodenaufstandsfläche des Laufstreifens auf, wobei die Bodenaufstandsfläche dem statisch ermittelten Footprint gemäß E.T.R.T.O.-Standards (Last bei 70 % der maximalen Tragfähigkeit bei einem Innendruck von 85 %) entspricht. Im Umfangsabschnitt 1 sind zwei nebeneinander sowie in Umfangsrichtung umlaufende Nuten 2a, 2b ausgebildet, wobei die Nut 2a in der in Fig. 1 linken Hälfte des Umfangsabschnittes 1 und die Nut 2b in der in Fig. 1 rechten Hälfte des Umfangsabschnittes 1 verläuft. Abgesehen von den Nuten 2a, 2b befinden sich im Laufstreifen und auch in diesem Umfangabschnitte Profilstrukturen bekannter Art, die nicht dargestellt sind.

Die Nuten 2a, 2b weisen über ihre Umfangserstreckung jeweils einen gleichbleibenden Querschnitt auf, wobei wie Fig. 1a zeigt, der Querschnitt der Nut 2a mit jenem der Nut 2b übereinstimmt. Gemäß Fig. 1a ist jede der Nuten 2a, 2b, im Querschnitt betrachtet, durch zwei im Wesentlichen V-förmig zueinander verlaufende Nutflanken 3 und einen zwischen den beiden Nutflanken 3 verlaufenden, schmalen sowie leicht gerundeten Nutgrund 4 begrenzt. Ferner sind die Nuten 2a, 2b jeweils bezüglicher einer von der Umfangsrichtung und der radialen Richtung aufgespannten, durch die tiefste Stelle ihres Nutgrundes 4 verlaufende Ebene symmetrisch ausgeführt. In Fig. 1a sind diese Ebenen durch in radialer Richtung verlaufenden Linien l₁ gekennzeichnet. An ihrer tiefsten Stelle weisen die Nuten 2a, 2b in radialer Richtung eine Tiefe T₁ von mindestens 2,0 mm und höchstens 50%, vorzugsweise von höchstens 35%, der Profiltiefe auf. Der Nutgrund 4 weist in axialer Richtung zwischen seinen radial äußeren Enden eine Breite B₁ von 0,5 mm bis 1,6 mm, insbesondere von bis zu 1,0 mm, auf.

Die V-förmig zueinander verlaufenden Nutflanken 3 setzen sich jeweils aus einem inneren Flankenabschnitt 3' und einer äußeren Übergangsrundung 3" zusammen. Die beiden inneren Flankenabschnitte 3' der zu einer Nut 2a, 2b gehörenden Nutflanken 3 schließen jeweils an die beiden radial äußeren Enden des Nutgrundes 4 an und sind entsprechend des V-förmigen Querschnittes der Nut 2a, 2b zur radialen Richtung geneigt. Die äußeren Übergangsrundungen 3" verlaufen, im Querschnitt der Nut 2a, 2b betrachtet, vorzugsweise entlang von Kreisbögen mit einem Radius R₁ von 0,5 mm bis 5,0 mm, insbesondere von mindestens 2,5 mm, wobei der Radius R₁ vorzugsweise derart gewählt ist, dass die Nutflanken 3 knickfrei in die Oberfläche des Laufstreifens übergehen. Dementsprechend sind die Übergangsrundungen 3" der Nutflanken 3 zueinander konkav gekrümmt. Zwischen den radial äußeren Enden der Übergangsrundungen 3' der Nutflanken 3 weisen die Nuten 2a, 2b in axialer Richtung eine Breite B₂ von 2,0 mm bis 10,0 mm, insbesondere von mindestens3,0 mm, auf.Die Nutflanken 3 sind zur radialen Richtung unter einem Winkel α geneigt, welcher durch die Tiefe T₁ und die Breite B₂ der Nut 2a, 2b, die Breite B₁ des Nutgrundes 4 und den Radius R₁ der Übergangsrundungen 3" bestimmt ist und 24° bis 30°, insbesondere bis zu 26°, beträgt. Die Nut 2a weist von der Nut 2b in axialer Richtung einen Abstand a auf, welcher zwischen den radial äußeren Enden der einander zugewandten Übergangsrundungen 3" der beiden Nuten 2a, 2b ermittelt wird und 20% bis 50% der Breite der Bodenaufstandsfläche entspricht.

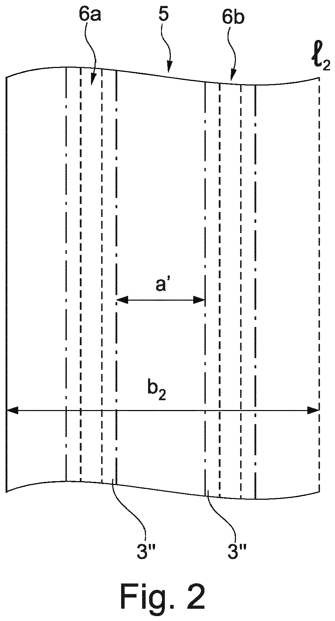

Fig. 2 zeigt einen schulterseitigen, innerhalb der Bodenaufstandsfläche befindlichen, in Umfangsrichtung umlaufenden Umfangsabschnitt 5 eines Laufstreifens. Eine Linie l₂ deutet den einen Rand der Bodenaufstandsfläche des Laufstreifens an. Der schulterseitige Umfangsabschnitt 5 weist in axialer Richtung eine Breite b₂ auf, die 20% bis 40% der Bodenaufstandsflächenbreite beträgt. Innerhalb der Bodenaufstandsfläche verlaufen im schulterseitigen Umfangsabschnitt 5 nebeneinander zwei in Umfangsrichtung umlaufende Nuten 6a, 6b, wobei die Nut 6a gegenüber der Nut 6b weiter laufstreifeninnenseitig verläuft. Die Nuten 6a, 6b weisen einen mit den bereits beschriebenen Nuten 2a, 2b übereinstimmenden Querschnitt und daher ebenfalls Nutflanken mit Übergangsrundungen 3" auf. An der Oberfläche des schulterseitigen Umfangsabschnittes 5 weisen die Nuten 6a, 6b zwischen den radial äußeren Enden ihrer einander zugewandten Übergangsrundungen 3" voneinander in axialer Richtung einen Abstand a' von 15,0 mm bis 40,0 mm auf.

Wie bereits erwähnt weist der Laufstreifen abgesehen von den Nuten 2a, 2b weitere, nicht dargestellte, übliche Profilstrukturen auf, beispielsweise Querrillen, Schrägrillen, Umfangsrillen und Einschnitte, die eine Gliederung des Laufstreifens in Profilblöcke und/oder Profilbänder bewirken. Die Nuten 2a, 2b sowie die Nuten 6a, 6b sind daher über den Reifenumfang an einer Anzahl von Stellen in ihrem Verlauf unterbrochen.

Die Erfindung ist auf die beschriebenen Ausführungsvarianten nicht beschränkt. Der Laufstreifen weist insgesamt zumindest zwei der beschriebenen Nuten auf, die an beliebigen Stellen des Laufstreifens ausgebildet sein können.

### Bezugszeichenliste

- 1......................: Umfangsabschnitt
- 2a, 2b...............: Nut
- 3......................: Nutflanke
- 3' .....................: innerer Flankenabschnitt
- 3"....................: äußere Übergangsrundung
- 4......................: Nutgrund
- 5......................: schulterseitiger Umfangsabschnitt
- a, a'.................: Abstand
- b₁.....................: Breite
- B₁, B₂..............: Breite
- l₁, l₂..................: Linie
- R₁....................: Radius
- T₁....................: Tiefe
- α......................: Winkel

## Patentansprüche

1. Fahrzeugluftreifen mit einem Laufstreifen mit Profilpositiven, beispielsweise Profilblöcken oder Profilbändern, und Profilnegativen, beispielsweise Rillen oder Einschnitten, wobei im Laufstreifen innerhalb der Bodenaufstandsfläche zumindest zwei in Umfangsrichtung des Laufstreifens umlaufende, gegebenenfalls durch Rillen oder Einschnitte unterbrochene Nuten (2a, 2b, 6a, 6b) verlaufen, welche eine Tiefe (T₁) von mindestens 2,0 mm, einen in dieser Tiefe (T₁) verlaufenden Nutgrund (4) und an diesen anschließende Nutflanken (3) aufweisen, welche, im Querschnitt der Nuten (2a, 2b, 6a, 6b) betrachtet, zueinander V-förmig verlaufen, zur Oberfläche des Laufstreifens zueinander konkav gekrümmte Übergangsrundungen (3") sowie zwischen den Übergangsrundungen (3") und dem Nutgrund (4) verlaufende ebene Flankenabschnitte (3') aufweisen, wobei die Nuten (2a, 2b, 6a, 6b) zwischen den radial äußeren Enden der Übergangsrundungen (3") eine Breite (B₂) von 2,0 mm bis 10,0 mm aufweisen,
**dadurch gekennzeichnet,**
**dass** die Tiefe (T₁) der Nuten (2a, 2b, 6a, 6b) höchstens 50% der Profiltiefe beträgt, wobei die ebenen Flankenabschnitte (3') der Nutflanken (3"), im Querschnitt der Nuten (2a, 2b, 8a, 8b, 12a, 12b) betrachtet, zur radialen Richtung unter einem Winkel (α) von 24° bis 30°, insbesondere von bis zu 26°, geneigt sind.

2. Fahrzeugluftreifen nach Anspruch 1, **dadurch gekennzeichnet, dass** die Breite (B₂) der Nuten (2a, 2b, 6a, 6b) zwischen den radial äußeren Enden der Übergangsrundungen (3") mindestens 3,0 mm beträgt.

3. Fahrzeugluftreifen nach Anspruch 1 oder 2, **dadurch gekennzeichnet, dass** die Tiefe (T₁) der Nuten (2a, 2b, 6a, 6b) bis zu 35% der Profiltiefe beträgt.

4. Fahrzeugluftreifen nach einem der Ansprüche 1 bis 3, **dadurch gekennzeichnet, dass** die zumindest zwei der in Umfangsrichtung umlaufenden Nuten (2a, 2b) in einem in Umfangsrichtung umlaufenden Umfangsabschnitt (1) des Laufstreifens verlaufen, welcher in axialer Richtung eine Breite (b₁) von 25% bis 70%, insbesondere von mindestens 50%, der Breite der Bodenaufstandsfläche des Laufstreifens aufweist.

5. Fahrzeugluftreifen nach Anspruch 4, **dadurch gekennzeichnet, dass** die zumindest zwei im Umfangsabschnitt (1) des Laufstreifens in Umfangsrichtung umlaufenden Nuten (2a, 2b) zwischen den radial äußeren Enden ihrer einander benachbarten Übergangsrundungen (3") in axialer Richtung einen Abstand (a) von 20% bis 50% der Breite der Bodenaufstandsfläche aufweisen.

6. Fahrzeugluftreifen nach einem der Ansprüche 1 bis 3, **dadurch gekennzeichnet, dass** zumindest zwei der in Umfangsrichtung umlaufenden Nuten (6a, 6b) in einem schulterseitigen Umfangsabschnitt (5) des Laufstreifens verlaufen, welcher in axialer Richtung eine Breite (b₂) von 20% bis 40% der Breite der Bodenaufstandsfläche des Laufstreifens aufweist.

7. Fahrzeugluftreifen nach einem der Ansprüche 1 bis 6, **dadurch gekennzeichnet, dass** zumindest zwei der in Umfangsrichtung umlaufenden Nuten (2a, 2b, 6a, 6b) innerhalb derselben Blockreihe oder desselben Profilbandes verlaufen.

8. Fahrzeugluftreifen nach einem der Ansprüche 1 bis 7, **dadurch gekennzeichnet, dass** zumindest zwei der in Umfangsrichtung umlaufenden Nuten (2a, 2b, 6a, 6b) zwischen den radial äußeren Enden ihrer einander benachbarten Übergangsrundungen (3") in axialer Richtung einen Abstand (a, a') von 15,0 mm bis 40,0 mm aufweisen.

9. Fahrzeugluftreifen nach Ansprüche 1 bis 8, **dadurch gekennzeichnet, dass** zumindest eine der in Umfangsrichtung umlaufenden Nuten (2a, 2b, 6a, 6b) in der einen Hälfte des Laufstreifens verläuft und zumindest eine der in Umfangsrichtung umlaufenden Nuten (2a, 2b, 6a, 6b) in der anderen Hälfte des Laufstreifens verläuft.

10. Fahrzeugluftreifen nach einem der Ansprüche 1 bis 9, **dadurch gekennzeichnet, dass** im Laufstreifen innerhalb der Bodenaufstandsfläche bis zu sechs, insbesondere bis zu vier, in Umfangsrichtung umlaufende Nuten (2a, 2b, 6a, 6b) vorgesehen sind.

11. Fahrzeugluftreifen nach einem der Ansprüche 1 bis 10, **dadurch gekennzeichnet, dass** die Übergangsrundungen (3") der Nutflanken (3), im Querschnitt der Nuten (2a, 2b, 6a, 6b) betrachtet, entlang von Kreisbögen mit einem Radius (R₁) von 0,5 mm bis 5,0 mm, insbesondere von mindestens 2,5 mm, gekrümmt sind.

12. Fahrzeugluftreifen nach einem der Ansprüche 1 bis 11, **dadurch gekennzeichnet, dass**, die Übergangsrundungen (3") der Nutflanken (3), im Querschnitt der Nuten (2a, 2b, 6a, 6b) betrachtet, knickfrei in die Oberfläche des Laufstreifens übergehen.

13. Fahrzeugluftreifen nach einem der Ansprüche 1 bis 12, **dadurch gekennzeichnet, dass** der Nutgrund (4) der Nuten (2a, 2b, 6a, 6b) an seiner breitesten Stelle eine Breite (B₁) von 0,5 mm bis 1,6 mm aufweist.

## Claims

1. Pneumatic vehicle tyre comprising a tread with profile positives, for example profile blocks or profile bars, and profile negatives, for example channels or sipes, wherein in the tread there are within the ground contact area at least two grooves (2a, 2b, 6a, 6b), which run around in the circumferential direction of the tread, are possibly interrupted by channels or sipes, have a depth (T₁) of at least 2.0 mm, a groove base (4), running at this depth (T₁) and, adjoining the said base, groove flanks (3), which run in a V-shaped manner in relation to one another when viewed in the cross section of the grooves (2a, 2b, 6a, 6b) and have transitional roundings (3"), which are concavely curved in relation to one another with respect to the surface of the tread, and also planar flank portions (3') running between the transitional roundings (3") and the groove base (4), wherein the grooves (2a, 2b, 6a, 6b) have between the radially outer ends of the transitional roundings (3") a width (B₂) of 2.0 mm to 10.0 mm,
**characterized**
**in that** the depth (T₁) of the grooves (2a, 2b, 6a, 6b) is at most 50% of the profile depth, wherein the planar flank portions (3') of the groove flanks (3"), when viewed in the cross section of the grooves (2a, 2b, 8a, 8b, 12a, 12b), are inclined in relation to the radial direction at an angle (α) of 24° to 30°, in particular of up to 26°.

2. Pneumatic vehicle tyre according to Claim 1, **characterized in that** the width (B₂) of the grooves (2a, 2b, 6a, 6b) between the radially outer ends of the transitional roundings (3") is at least 3.0 mm.

3. Pneumatic vehicle tyre according to Claim 1 or 2, **characterized in that** the depth (T₁) of the grooves (2a, 2b, 6a, 6b) is up to 35% of the profile depth.

4. Pneumatic vehicle tyre according to one of Claims 1 to 3, **characterized in that** the at least two of the grooves (2a, 2b) running around in the circumferential direction run in a circumferential portion (1) of the tread running around in the circumferential direction that has in the axial direction a width (b₁) of 25% to 70%, in particular of at least 50%, of the width of the ground contact area of the tread.

5. Pneumatic vehicle tyre according to Claim 4, **characterized in that** the at least two grooves (2a, 2b) running around in the circumferential direction in the circumferential portion (1) of the tread have between the radially outer ends of their transitional roundings (3") adjacent to one another in the axial direction a distance (a) of 20% to 50% of the width of the ground contact area.

6. Pneumatic vehicle tyre according to one of Claims 1 to 3, **characterized in that** at least two of the grooves (6a, 6b) running around in the circumferential direction run in a shoulder-side circumferential portion (5) of the tread that has in the axial direction a width (b₂) of 20% to 40% of the width of the ground contact area of the tread.

7. Pneumatic vehicle tyre according to one of Claims 1 to 6, **characterized in that** at least two of the grooves (2a, 2b, 6a, 6b) running around in the circumferential direction run within the same row of blocks or the same bar.

8. Pneumatic vehicle tyre according to one of Claims 1 to 7, **characterized in that** at least two of the grooves (2a, 2b, 6a, 6b) running around in the circumferential direction has between the radially outer ends of their transitional roundings (3") adjacent to one another in the axial direction a distance (a, a') of 15.0 mm to 40.0 mm.

9. Pneumatic vehicle tyre according to one of Claims 1 to 8, **characterized in that** at least one of the grooves (2a, 2b, 6a, 6b) running around in the circumferential direction runs in one half of the tread and at least one of the grooves (2a, 2b, 6a, 6b) running around in the circumferential direction runs in the other half of the tread.

10. Pneumatic vehicle tyre according to one of Claims 1 to 9, **characterized in that** in the tread there are provided within the ground contact area up to six, in particular up to four, grooves (2a, 2b, 6a, 6b) running around in the circumferential direction.

11. Pneumatic vehicle tyre according to one of Claims 1 to 10, **characterized in that** the transitional roundings (3") of the groove flanks (3), when viewed in the cross section of the grooves (2a, 2b, 6a, 6b), are curved along arcs of a circle with a radius (R₁) of 0.5 mm to 5 mm, in particular of at least 2.5 mm.

12. Pneumatic vehicle tyre according to one of Claims 1 to 11, **characterized in that** the transitional roundings (3") of the groove flanks (3), when viewed in the cross section of the grooves (2a, 2b, 6a, 6b), go over into the surface of the tread without any kinks.

13. Pneumatic vehicle tyre according to one of Claims 1 to 12, **characterized in that** the groove base (4) of the grooves (2a, 2b, 6a, 6b) has at its widest point a width (B₁) of 0.5 mm to 1.6 mm.

## Revendications

1. Pneumatique de véhicule comprenant une bande de roulement pourvue de profilés en saillie, par exemple des blocs profilés ou des bande profilées, et des profilés en creux, par exemple des rainures ou des incisions, au moins deux gorges (2a, 2b, 6a, 6b), qui s'étendent dans la direction circonférentielle de la bande de roulement, en étant éventuellement interrompues par des rainures ou des incisions, s'étendant dans la bande de roulement à l'intérieur de la surface de contact avec le sol, lesquelles gorges ont une profondeur (T₁) d'au moins 2,0 mm, un fond de gorge (4) s'étendant à cette profondeur (T₁) et des flancs de gorge (3) qui se raccordent audit fond de gorge et qui s'étendent l'un par rapport à l'autre en forme de V dans une vue en coupe transversale des gorges (2a, 2b, 6a, 6b) et qui comportent des arrondis de transition (3") qui sont incurvés concaves les uns par rapport aux autres et par rapport à la surface de la bande de roulement ainsi que des portions de flanc planes (3') qui s'étendent entre les arrondis de transition (3") et le fond de gorge (4), les gorges (2a, 2b, 6a, 6b) ayant entre les extrémités radialement extérieures des arrondis de transition (3") une largeur (B₂) de 2,0 mm à 10,0 mm,
**caractérisé en ce que**,
la profondeur (T₁) des gorges (2a, 2b, 6a, 6b) est au plus égale à 50 % de la profondeur de profilé, les portions de flanc planes (3') des flancs de gorge (3") étant inclinées, dans une vue en coupe transversale des gorges (2a, 2b, 8a, 8b, 12a, 12b), d'un angle (α) de 24° à 30°, en particulier jusqu'à 26°, par rapport à la direction radiale.

2. Pneumatique de véhicule selon la revendication 1, **caractérisé en ce que** la largeur (B₂) des gorges (2a, 2b, 6a, 6b) entre les extrémités radialement extérieures des arrondis de transition (3") est d'au moins 3,0 mm.

3. Pneumatique de véhicule selon la revendication 1 ou 2, **caractérisé en ce que** la profondeur (T₁) des gorges (2a, 2b, 6a, 6b) peut atteindre 35 % de la profondeur de profilé.

4. Pneumatique de véhicule selon l'une des revendications 1 à 3, **caractérisé en ce que** les au moins deux des gorges (2a, 2b), qui s'étendent dans la direction circonférentielle, s'étendent dans une portion de circonférence (1) de la bande de roulement qui s'étend dans la direction circonférentielle et qui a dans la direction axiale une largeur (b₁) de 25 % à 70 %, en particulier d'au moins 50 %, de la largeur de la surface de contact avec le sol de la bande de roulement.

5. Pneumatique de véhicule selon la revendication 4, **caractérisé en ce que** les au moins deux gorges (2a, 2b), qui s'étendent dans la direction circonférentielle dans la portion de circonférence (1) de la bande de roulement, sont à une distance (a) de 20 % à 50 % de la largeur de la surface de contact avec le sol entre les extrémités radialement extérieures de leurs arrondis de transition adjacents (3") dans la direction axiale.

6. Pneumatique de véhicule selon l'une des revendications 1 à 3, **caractérisé en ce qu'**au moins deux des gorges (6a, 6b), qui s'étendent dans la direction circonférentielle, s'étendent dans une portion de circonférence côté épaulement (5) de la bande de roulement qui a, dans la direction axiale, une largeur (b₂) de 20 % à 40 % de la largeur de la surface de contact avec le sol de la bande de roulement.

7. Pneumatique de véhicule selon l'une des revendications 1 à 6, **caractérisé en ce qu'**au moins deux des gorges (2a, 2b, 6a, 6b), qui s'étendent dans la direction circonférentielle, s'étendent à l'intérieur d'une même rangée de blocs ou d'une même bande profilée.

8. Pneumatique de véhicule selon l'une des revendications 1 à 7, **caractérisé en ce qu'**au moins deux des gorges (2a, 2b, 6a, 6b), qui s'étendent dans la direction circonférentielle, sont dans la direction axiale, entre les extrémités radialement extérieures de leurs arrondis de transition adjacents (3"), à une distance (a, a') de 15,0 mm à 40,0 mm.

9. Pneumatique de véhicule selon les revendications 1 à 8, **caractérisé en ce qu'**au moins une des gorges (2a, 2b, 6a, 6b), qui s'étendent dans la direction circonférentielle, s'étend dans une moitié de la bande de roulement et au moins une des gorges (2a, 2b, 6a, 6b), qui s'étendent dans la direction circonférentielle, s'étend dans l'autre moitié de la bande de roulement.

10. Pneumatique pour véhicule selon l'une des revendications 1 à 9, **caractérisé en ce que** jusqu'à six, notamment jusqu'à quatre, gorges (2a, 2b, 6a, 6b), qui s'étendent dans la direction circonférentielle, sont prévues dans la bande de roulement à l'intérieur de la surface de contact avec le sol.

11. Pneumatique de véhicule selon l'une des revendications 1 à 10, **caractérisé en ce que** les arrondis de transition (3") des flancs de gorge (3), dans une vue en coupe transversale des gorges (2a, 2b, 6a, 6b), sont incurvés le long d'arcs de cercle de rayon (R₁) de 0,5 mm à 5,0 mm, en particulier d'au moins 2,5 mm.

12. Pneumatique de véhicule selon l'une des revendications 1 à 11, **caractérisé en ce que** les arrondis de transition (3") des flancs de gorge (3), dans une vue en coupe transversale des gorges (2a, 2b, 6a, 6b), se fondent sans pli dans la surface de la bande de roulement.

13. Pneumatique de véhicule selon l'une des revendications 1 à 12, **caractérisé en ce que** le fond de gorge (4) des gorges (2a, 2b, 6a, 6b) a en son point le plus large une largeur (B₁) de 0,5 mm à 1,6 mm.
